# EUROPÄISCHE PATENTSCHRIFT

(11) **EP 1 613 867 B1**
(45) Veröffentlichungstag und Bekanntmachung des Hinweises auf die Patenterteilung: **02.12.2009**
(21) Anmeldenummer: 04726954.3
(22) Anmeldetag: 13.04.2004
(51) Int. Cl.: F16C 13/00, B05C 11/04

(54) **WALZENBESCHICHTUNGSVERFAHREN UND BESCHICHTETE WALZE**
ROLLER COATING METHOD AND COATED ROLLER
PROCEDE DE REVETEMENT DE ROULEAUX ET ROULEAU MUNI D'UN REVETEMENT

(30) Priorität: 11.04.2003 DE 10317025; 16.04.2003 DE 10317840; 16.04.2003 DE 10317841; 25.08.2003 DE 10339443
(43) Veröffentlichungstag der Anmeldung: 11.01.2006
(73) Patentinhaber: Richter, Dirk, 52349 Düren (DE)
(72) Erfinder: Richter, Dirk, 52349 Düren (DE)
(74) Vertreter: Reuther, Martin
(86) Internationale Anmeldenummer: PCT/DE2004/000759
(87) Internationale Veröffentlichungsnummer: WO 2004/092599

(56) Entgegenhaltungen:
- US-A- 3 619 447
- US-A- 4 084 500
- US-A- 4 466 164
- US-A1- 2002 114 649
- US-A1- 2003 057 402

## Beschreibung

Die Erfindung betrifft ein Verfahren zur Beschichtung einer Walze mit einem Bezug, der aus wenigstens zwei Komponenten gebildet wird, sowie eine entsprechend beschichtete Walze.

Beispielsweise aus der WO 89/00507 A1 ist ein Walzenbeschichtungsverfahren und eine entsprechend beschichtete Walze bekannt, wobei hier Hartstoffkörner in einer metallischen Matrix aufgetragen werden, indem die zu beschichtende Walze in einem entsprechenden Bad rotiert wird. Ein anderes Beschichtungsverfahren zeigt die DE 693 14 966 T2. Hierbei wird eine Presswalzenbeschichtung dadurch hergestellt, dass ein Verstärkungsmaterial mit einer einen Füllstoff, wie mineralische Partikel, synthetische Partikel oder feuerfesten Partikel, sowie eine Epoxydmatrix umfassenden, aushärtenden Flüssigkeit durchtränkt und spiralförmig auf eine Walze gewickelt wird.

Es ist Aufgabe der Erfindung, ein derartiges Verfahren derart auszugestalten, dass ein qualitativ hochwertiger und sehr gleichförmiger Bezug bereitgestellt wird. Ebenso ist es Aufgabe vorliegender Erfindung, eine entsprechend beschichtete Walze bereitzustellen.

Als Lösung schlägt die Erfindung ein Verfahren zur Beschichtung einer Walze mit einem Bezug, der aus wenigstens zwei aushärtenden Komponenten gebildet wird, vor, bei welchem zunächst die beiden Komponenten unter Luftausschluss bzw. vorzugsweise unter Vakuum vermischt und anschließend das auf diese Weise bereitgestellte Gemisch als Bezug auf die Walze aufgetragen wird.

Auf diese Weise können die beiden Komponenten mit einer sehr hohen Energie und verhältnismäßig schnell vermischt werden, ohne Luft oder sonstiges Gas in die Mischung einzubringen, die dann entweder aufwendig ausgasen müssen oder aber eingeschlossen bleiben und die Qualität des Walzenbezugs mindern. Insbesondere kann durch die höheren Mischenergien, wie beispielsweise eine höhere Rührgeschwindigkeit, die Mischdauer verkürzt werden, sodass insbesondere bei aushärtenden Mischungen die Bearbeitungszeit für das eigentliche Aufbringen bei gleichem Vermischungsgrad ansteigt und auch dementsprechend die Qualität des Bezugs höher ist.

Insbesondere können die beiden Komponenten unter Vakuum einander beigegeben werden. Auf diese Weise kann bereits bei der Beigabe der einen Komponente zu der anderen Komponente ein Einschluss von Luft erfolgreich vermieden werden, wodurch sich die Qualität des Bezugs verbessern lässt.

Es versteht sich jedoch, dass das Vakuum nicht während des gesamten Misch- bzw. Rührvorganges aufrecht erhalten werden muss. Dieses ist lediglich solange notwendig, solange eine nennenswerte Gefahr von Lufteinschlüssen besteht.

Vorteilhafter Weise ist die Stärke des Vakuums der Rührgeschwindigkeit bzw. der beim Mischen aufgebrachten Energie angepasst, wobei schon ein geringer Unterdruck bei geringen Rührgeschwindigkeiten ausreichen kann, um ein Einschließen von Luft- bzw. Gasblasen zu vermeiden. Unter gegebenen Umständen kann auf einen Unterdruck, insbesondere während des Mischens verzichtet werden, wenn die beiden Komponenten ausreichend entgast sind und verhindert wird, dass Luft in das Gemisch beim Vermischen eingetragen wird. Beispielsweise kann der Mischvorgang in einem Raum stattfinden, in dem überhaupt keine Luft vorhanden ist.

Insofern unterscheidet sich dieses Verfahren von dem in der DE 101 20 786 A1 offenbarten Verfahren zur Herstellung eines Rakelbetts, bei welchem zwei Kunststoffkomponenten vermischt und in einem Mischkopf mit einem Vernetzer versetzt werden, wobei zunächst die eine Kunststoffkomponente entgast und nach dem Einmischen der zweiten Kunststoffkomponente die Mischung erneut entgast und über mehr als 30 Minuten beruhigt wird. Bei vorliegendem Verfahren erfolgt erfindungsgemäß auch das Mischen der Komponenten unter Vakuum.

Dementsprechend schlägt die Erfindung auch eine Walze mit einer Kunststoff aufweisenden Beschichtung vor, die sich dadurch auszeichnet, dass die Beschichtung an ihrer Oberfläche unter 50 sichtbare Poren/m² aufweist. Eine derartige Ausgestaltung wird nur ermöglicht, wenn die den Kunststoff bildenden Komponenten unter Vakuum vermischt werden, da längere Rühr- bzw. Entgasungszeiten wegen des durch einen Vernetzer und/oder Härter induzierten Aushärtevorgangs nicht möglich sind. Eine derartige Walzenbeschichtung erweist sich als äußerst stabil. Insbesondere brauchen derartige Poren nicht nachträglich geschlossen werden, was ohnehin zu einer Destabilisierung des Bezuges führt.

Bei geeigneter Verfahrensführung, insbesondere bei ausreichend hohen Rührgeschwindigkeiten und bei ausreichend hohem Vakuum kann auch eine Beschichtung erzielt werden, die unter 20 oder 10 bzw. 5 sichtbare Poren/m² aufweist.

Durch intensives Rühren lassen sich die Poren zerschlagen und unter die Sichtbarkeitsgrenze verkleinern. Dieses ändert jedoch nichts daran, dass eine entsprechende Menge an Luft oder sonstigem Gas in dem Bezug eingeschlossen ist und dessen Qualität mindert. Dementsprechend wird durch vorliegende Erfindung auch ein Bezug unter Schutz gestellt, der über Feinporen weniger Gaseinschlüsse bzw. innere Oberflächen aufweist, wie diese durch 50 bzw. 20, 10 oder 5 sichtbare Poren/m² in einem Überzug bedingt sind.

Es versteht sich, dass eine derartig ausgestaltete Beschichtungsoberfläche auch ein Anzeichen für eine entsprechende Güte der Beschichtung an sich ist, die sich demnach über ihre Schichtdicke ebenfalls durch eine sehr geringe Anzahl an Poren bzw. Luft- oder Gaseinschlüssen auszeichnet, was wiederum eine äußerst stabile Beschichtung bedingt.

Das Verfahren eignet sich insbesondere für Bezüge, die Harze, wie beispielsweise Epoxydharze, umfassen und/oder bei denen eine Komponente mit einem Härter als zweite Komponente vermischt wird, bevor sie nach kurzer Zeit aushärten. Hierbei kann wenigstens eine Komponente Fasern, die für eine Faserverstärkung des fertigen Bezugs sorgen sollen, bzw. Hartstoffe, wie beispielsweise Hartmetalle oder Keramiken, umfassen. An derartigen Beistoffen können sich besonders leicht Luft- bzw. Gaseinschlüsse anlagern, wenn Komponenten mit derartigen Beistoffen verrührt werden.

Als Beistoff kommt insbesondere auch Diamantstaub bzw. Diamantpulver in Betracht, durch welchen sich ein guter Verschleißschutz realisieren lässt. Dieser Diamantstaub bzw. dieses Diamantpulver kann in einer Matrix, vorzugsweise aus Kunststoff, auf die Walze aufgebracht sein. Während die Verwendung von Diamantstaub bzw. -pulver als Schleifinaterial bekannt ist, wird durch diesen Bezug, der auch nachträglich auf eine Walze aufgebracht werden kann, für einen Wälzkörper, d.h. insbesondere für einen bestimmungsgemäß nicht abtragend wirksamen Körper, ein hervorradender Verschleißschutz realisiert.

Statt Diamantstaub bzw. -pulver kann auch kubisches Bornitrit oder jeder andere Edelhartstoff bzw. andere Edelhartstoffpartikel sowie Edelhartstoffpartikelkombination zur Anwendung kommen. Insbesondere fallen hierunter metallische Edelhartstoffe und nichtmetallische Edelhartstoffe, wobei nichtmetallische Edelhartstoffe bevorzugt werden. In Abgrenzung von der DE 693 14 966 T2, in welcher in der Kunststoffmatrix Füllmaterial zu finden ist, dass auch mineralische Partikel umfassen kann, wobei in dieser Druckschrift lediglich Feldspatpartikel aufgeführt sind, oder Aluminiumoxid, welches als traditioneller, einfacher und vor allen Dingen günstiger Hartstoff schon in Walzenbeschichtungen zu finden ist, stellt vorliegende Festlegung auf Hartstoffe bzw. Hartstoffpartikel eine gänzlich andere Art der Walzenbeschichtung zur Verfügung.

Bei vorliegender Beschichtung besteht zwischen den Hartstoffpartikeln und der diese Partikel haltenden Kunststoffinatrix ein Härteunterschied von mehreren Größenordnungen, anders als dieses bei der Beschichtung nach der DE 693 14 966 T2 oder auch bei Beschichtungen mit Hartstoffpartikeln in einer metallischen Matrix, wie diese beispielsweise in der WO 89/00507 A1 offenbart sind. Die Kombination dieser Materialien führt jedoch zu Walzenbezügen mit überraschend hervorragenden Eigenschaften; diese sind nämlich äußerst stabil, sowohl gegen Abrieb als auch bei hoher Druckbelastung. Es wird hierbei vermutet, dass die an sich weiche und elastische Lagerung der Hartstoffpartikel hierfür verantwortlich ist.

Darüber hinaus können derartige Beschichtungen bei Raumtemperatur aufgetragen werden, was die Herstellung erheblich vereinfacht.

Die Mischung aus Hartstoffpartikeln und Kunststoff kann in jeder geeigneten Weise auf die Walze aufgetragen werden. Insbesondere scheint ein spiralförmiges Auftragen vorteilhaft zu sein.

So kann einerseits eine Beschichtungseinrichtung, die entlang einer Achse der Walze verlagerbar ist und die ein Auftragsschwert, welches mit einer Bevorratung verbunden ist, und wenigstens ein dem Auftragsschwert nachlaufendes Abstreichschwert umfasst, und andererseits eine Beschichtungseinrichtung, die entlang einer Achse der Walze verlagerbar ist und die ein Auftragsschwert, welches mit einer Bevorratung verbunden ist, und wenigstens ein dem Auftragsschwert nachlaufendes Glättschwert umfasst, vorgesehen sein, die dann entsprechend verlagert werden.

Hierbei ermöglicht das nachfolgende Abstreichschwert, dass überstehendes Material einerseits abgenommen und auf andere Bereiche mit weniger Material verteilt wird. Darüber hinaus kann überstehendes Material auch abgeführt werden, wofür vorzugsweise ein Überlauf vorgesehen sein kann.

Vorzugsweise läuft das Abstreichschwert gegen seine Bewegungsrichtung von der Walze weg, so dass sich der Abstand zwischen Abstreichschwert und Walze zunehmend vergrößert, während das Abstreichschwert entlang der Walze geführt wird. Die Vergrößerung kann stufenweise oder kontinuierlich erfolgen. Auf diese Weise kann Material, welches möglicherweise übersteht bzw. durch Fließ- oder Aushärtungsprozess hinter dem Auftragsschwert auf- bzw. anwächst, noch abgestreift und neu auf der Walze verteilt bzw. in einen gegebenenfalls vorhandenen Überlauf abgeführt werden.

Zwar steigt hierdurch möglicherweise der Ist-Durchmesser der beschichteten Walze gegenüber einem Solldurchmesser an. Dieses ist - insbesondere bei kostspieligen Materialien - in der Regel unkritisch, da der Belag ohnehin nachbehandelt wird und ein zu großer Durchmesser in der Regel nicht so kritisch ist, wie ein zu geringer Durchmesser, insbesondere wenn die Materialansammlungen auf Kosten anderer Belagbereiche gebildet und somit der Durchmesser auf diesen geringeren Durchmesser nachgearbeitet werden muss.

Das Glättschwert, welches insbesondere auch dem Abstreichschwert nachlaufen kann, soll hingegen möglichst kein Material abtragen. Vielmehr besteht seine Hauptfunktion in einer gleichförmigen Verteilung des vorhandenen Materials und/oder einem leichten, ein Verfließen des Materials bewirkendem Komprimieren des aufgetragenen Materials. Es ist jedoch denkbar, dass kleinere Materialmengen auch von dem Glättschwert aufgenommen und abgeführt werden. Das Glättschwert kann gemeinsam mit dem Auftragsschwert bzw. unabhängig hiervon bewegt werden.

Des weiteren ist es möglich, dass Glättschwert über die gesamte Walzenlänge auszubilden und über die gesamte Walzenlänge an die Walze zu führen. Dieses kann beispielsweise auch durch ein oszillierende Bewegung geschehen.

Das Auftragsschwert kann durch wenigstens einen Ansatz begrenzt werden, welcher, von dem Auftragsschwert und der Bevorratung ausgehend, die Walze übergreift.

Auf diese Weise kann ein Materialsee geschaffen werden, unter welchem sich die Walze dreht und aus welchem sie den Belag entnimmt. Vorzugsweise entspricht der Abstand des jeweiligen Ansatzes von der Walze dem Abstand des Auftragsschwerts von der Walze. Insofern können die Ansätze je nach Walzendurchmesser gesondert geformt sein und auswechselbar an der Beschichtungseinrichtung befestigt sein.

Insbesondere das Abstreichschwert, aber auch das Glättschwert, können auch gegenüber der Bewegungsrichtung, entlang welcher sie parallel zur Wellenachse bewegt werden, vertikal angestellt sein und die Walze teilweise, ähnlich dem Ansatz, übergreifen. Darüber hinaus können - auch unabhängig von den übrigen Merkmalen der Erfindung - das Auftragsschwert und/oder das Glättschwert mit einem bezüglich der Bewegungsrichtung der Beschichtungseinrichtung variablen Abstand an der Walze angeordnet sein. Insbesondere kann dieser Abstand derart sein, dass das Schwert sich gegen die Bewegungsrichtung von der Walze entfernt.

Es versteht sich, dass eine derartige Beschichtungseinrichtung auch unabhängig von den übrigen Merkmalen vorliegender Erfindung vorteilhaft ist, um bei entlang der Walzenachse verlagerbaren Beschichtungseinrichtung bzw. bei spiralförmigen Beschichtungsvorgängen bei denen beispielsweise die Beschichtungseinrichtung an einem Schlitten einer Drehmaschine befestigt ist und z.B. synchronisiert mit der Umlaufgeschwindigkeit der zu beschichtenden Walze entlang der Walzenachse bewegt wird, durch Unregelmäßigkeiten in der Materialzufuhr, durch unkontrollierbare Fließprozesse, insbesondere auch im bereits beschichteten Bereich, und/oder durch Verlagerung während des Aushärtens entstehende Ungleichmäßigkeiten, die anschließend aufwändig nachbearbeitet werden müssen, von vorneherein zu vermeiden.

Kumulativ bzw. alternativ kann auch die Beschichtung unter Vakuum bzw. Luftausschluss erfolgen, um während des Beschichtungsvorgangs in das fließende und auf die Walze aufgebrachte Material eingeschlossene Luft zu vermeiden. Es versteht sich, dass eine derartige Beschichtung unter Vakuum oder Luftausschluss bzw. eine in einer Vakuumkammer angeordnete Beschichtungseinrichtung auch unabhängig von den übrigen Merkmalen vorliegender Erfindung vorteilhaft ist, um das Beschichtungsergebnis bei einer mit aushärtendendem Kunststoff beschichteten Walze zu optimieren.

Um auch die Ränder einer Walze mit einem Belag zu beschichten, dessen Qualität der Qualität des übrigen Walzenbelags entspricht, wird kumulativ bzw. alternativ vorgeschlagen, dass zunächst zumindest auf einer Seite der Walze ein Kopf angesetzt, dann sowohl der Kopf als auch die Walze beschichtet werden. Ebenso kann die Anordnung zum Beschichten einer Walze mit einem Belag wenigstens einen Kopf, der an einer Walzenseite aufgesetzt ist und denselben Durchmesser wie die Walze aufweist, umfassen. Nach dem Beschichten brauchen somit die Köpfe lediglich abgenommen werden und die Walze ist bis zu ihren Seitenrändern mit einem Belag gleichbleibender Qualität beschichtet.

Diese abnehmbaren Köpfe eignen sich insbesondere für den Auftrag von Epoxydharzen bzw. anderen mehrkomponentigen, schnell aushärtenden Belägen, die flüssig aufgetragen werden. Insbesondere kann bei einer derartigen Anordnung der Belag bei drehender Walze fortschreitend von einer Walzenseite zur anderen Walzenseite aufgetragen werden, was für schnell aushärtende Materialien vorteilhaft ist, da ein geringer Ausschuss verbleibt. Dieses Auftragsverfahren kann sich in einer entsprechend der Drehgeschwindigkeit der Walze und der fortschreitenden Geschwindigkeit einer entsprechenden Auftragseinrichtung spiralförmig umlaufenden Grundstruktur des aufgebrachten Belags umsetzen. Insbesondere erweist sich diese Vorgehensweise als vorteilhaft für Beläge, bei denen ein Einbringen von Luft in den Belag kritisch ist, da durch ein derartiges Auftragsverfahren der Bereich des flüssigen Materials, der mit Luft in Kontakt kommt, minimiert werden kann. Durch den Kopf kann jeweils eine Einlauf- bzw. Auslaufzone bereitgestellt werden, so dass beim Einlauf bzw. beim Auslauf entstehende Lufteinschlüsse oder Materialüberschüsse bzw. ähnliches unkritisch sind.

Vorzugsweise ist der Kopf zerstörungsfrei von der Walze abnehmbar, so dass er schnell und ohne großen Aufwand von der Walze entfernt werden kann, wenn der Beschichtungsvorgang beendet ist, wobei in diesem Zusammenhang der Begriff "zerstörungsfrei" sich ausdrücklich nicht auf den aufgebrachten Walzenbelag bezieht. Es versteht sich, dass ein derartiges, einen angesetzten und abnehmbaren Kopf umfassendes Beschichtungsverfahren sowie eine entsprechende Beschichtungseinrichtung auch unabhängig von den übrigen Merkmalen vorliegender Erfindung vorteilhaft ist. Selbiges gilt für eine beschichtete Walze, bei welcher die Beschichtung an wenigstens einer Seite in ihrer durchschnittlichen Güte der durchschnittlichen Güte der übrigen Beschichtung entspricht, was nach vorliegendem Kenntnisstand lediglich durch einen derartigen Kopf realisiert werden kann.

Statt eines spiralförmigen Auftragens kann jedoch auch ein Aufspritzen, Aufspachteln, Aufstreichen oder Auftragen der Beschichtung erfolgen. Dieses kann jeweils spiralförmig, dass heißt in einer umlaufenden Bahn, oder auch über die Walzenbreite in einem Schritt erfolgen. Insbesondere kann bei letzterem ein über die gesamte Länge der Walze reichendes Schwert vorgesehen sein, mit welchem die flüssige Komponente auf die Walze aufgetragen wird. Es versteht sich, dass ein derartiges Schwert auch unabhängig von den übrigen Merkmalen vorliegender Erfindung vorteilhaft ist, indem eine Spiralstruktur erst gar nicht in den Belag eingebracht wird, die gegebenenfalls das Beschichtungsergebnis verschlechtert, insbesondere wenn ein Ausschuss an Beschichtungsmaterial nur eine untergeordnete Rolle spielt. Ein Aufspritzen kann, insbesondere wenn Diamantstaub oder Staub mit kubischem Bornitrid verwendet wird, vorteilhaft sein, um sehr dünne Schichten zu erwirken, wodurch der Materialauftrag an dem jeweiligen Staub, der letztlich innerhalb des gesamten Matrixvolumens über die Dicke der aufgetragenen Schicht zu finden ist, minimiert werden kann.

Weitere Vorteile, Ziele und Eigenschaften vorliegender Erfindung werden anhand der nachfolgenden Erläuterung anliegender Zeichnung beschrieben. In der Zeichnung zeigen:
- Fig. 1: eine erste Beschichtungseinrichtung in schematischer Ansicht von oben;
- Fig. 2: eine zweite Beschichtungseinrichtung in schematischer Ansicht von oben;
- Fig. 3: eine schematische Seitenansicht beider Beschichtungseinrichtungen;
- Fig. 4: eine Beschichtungsanordnung mit zwei abnehmbaren Köpfen und einer zu beschichtenden Walze;
- Fig. 5: den Beginn der Beschichtung bei der Anordnung nach Figur 4;
- Fig. 6: das Ende der Beschichtung bei der Anordnung nach Figur 4; und
- Fig. 7: die entsprechend der Figuren 4 bis 6 beschichtete Walze und die abgenommenen Köpfe.

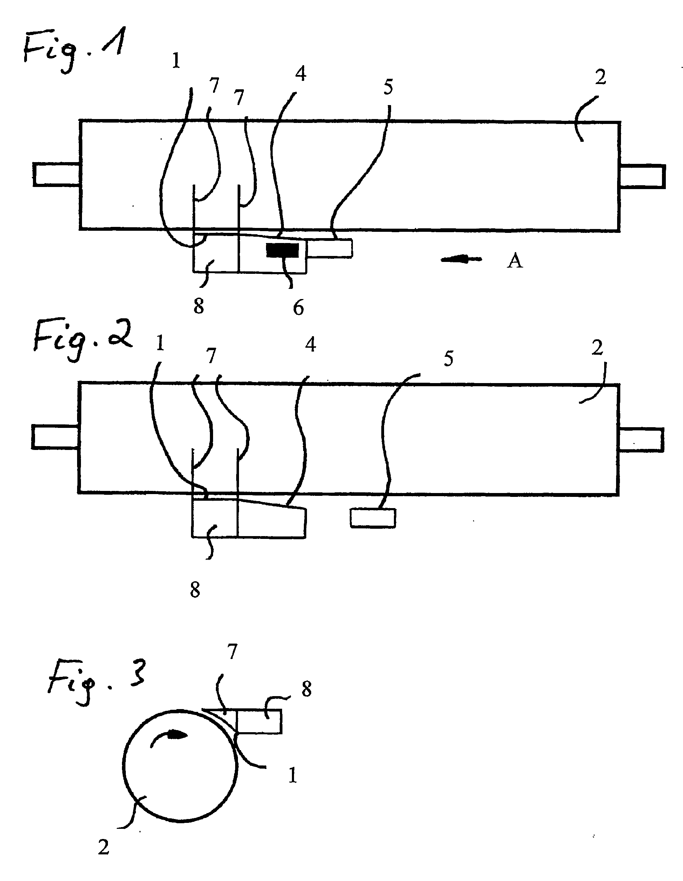

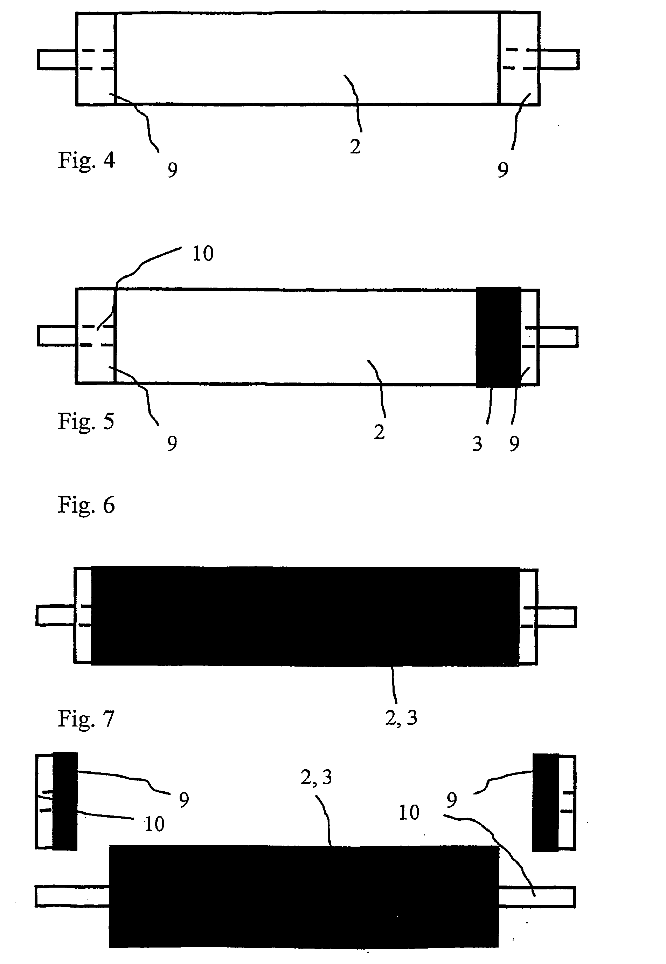

Die in den Figuren 1 bis 3 dargestellten Beschichtungseinrichtungen umfassen jeweils ein Auftragsschwert 1, welches in Pfeilrichtung A (siehe Figur 1) entlang einer Walze 2 bewegt wird, um diese mit einem flüssigen aber aushärtenden Belag 3 (siehe Figuren 5 bis 6) zu beschichten.

Die Beschichtungseinrichtung umfasst ein dem Auftragsschwert 1 nachlaufendes Abstreichschwert 4 und ein dem Auftragsschwert 1 nachlaufendes Glättschwert 5, die entsprechend verlagert werden. Das Glättschwert 5 kann gemeinsam mit dem Auftragsschwert 1 (siehe Ausführungsform nach Fig. 1) bzw. unabhängig hiervon (siehe Ausführungsform nach Fig. 2) bewegt werden. Je nach Erfordernissen kann in alternativen Ausführungsformen auf das Glättschwert bzw. auf das Abstreifschwert verzichtet werden.

Hierbei ermöglicht das nachfolgende Abstreichschwert 4, dass überstehendes Beschichtungsmaterial einerseits abgenommen und auf andere Bereich mit weniger Material verteilt wird. Darüber hinaus kann überstehendes Material auch abgeführt werden, wofür bei der Ausführungsform nach Figur 1 ein Überlauf 6 vorgesehen ist. Das Abstreichschwert 4 läuft gegen seine Bewegungsrichtung von der Walze 2 weg, so dass sich der Abstand zwischen Abstreichschwert 4 und Walze 2 zunehmend vergrößert, während das Abstreichschwert 4 entlang der Walze 2 geführt wird. Die Vergrößerung kann stufenweise oder kontinuierlich erfolgen. Auf diese Weise kann Material, welches möglicherweise übersteht bzw. durch Fließ- oder Aushärtungsprozess hinter dem Auftragsschwert auf- bzw. anwächst, noch abgestreift und neu auf der Walze verteilt bzw. in den gegebenenfalls vorhandenen Überlauf 6 abgeführt werden.

Das Glättschwert 5 soll hingegen möglichst kein Material abtragen. Vielmehr besteht seine Hauptfunktion in einer gleichförmigen Verteilung des vorhandenen Materials und/oder einem leichten, ein Verfließen des Materials bewirkendem Komprimieren des aufgetragenen Materials. Es ist jedoch denkbar, dass kleinere Materialmengen auch von dem Glättschwert 5 aufgenommen und abgeführt werden.

Das Auftragsschwert 1 kann durch wenigstens einen Ansatz 7 begrenzt werden, welcher, von dem Auftragsschwert 1 und einer Bevorratung 8 ausgehend, die Walze 2 übergreift, wie insbesondere in Figur 3 dargestellt. Auf diese Weise kann ein Materialsee geschaffen werden, unter welchem sich die Walze dreht und aus welchem sie den Belag entnimmt. Der Abstand des jeweiligen Ansatzes 7 von der Walze 2 entspricht bei diesen Ausführungsbeispielen dem Abstand des Auftragsschwerts 1 von der Walze 2. Insofern sind die Ansätze 7 je nach Walzendurchmesser gesondert geformt und auswechselbar an der Beschichtungseinrichtung befestigt.

In einer nicht dargestellten aber durchaus ohne Weiteres nachvollziehbaren Alternative ist ein durchgehendes Schwert vorgesehen, das über die gesamte Walzenlänge ausgebildet ist und über die gesamte Walzenlänge an die Walze geführt wird. Dieses kann beispielsweise auch durch eine oszillierende, insbesondere parallel zur Walzenachse oszillierende Bewegung geschehen. Ein solches durchgehendes Schwert kann ohne Weiteres lediglich als Glättschwert aber auch als Auftrags- und/oder Abstreifschwert genutzt werden.

Um auch die Ränder einer Walze 2 mit einem Belag 3 zu beschichten, dessen Qualität der Qualität des übrigen Walzenbelags entspricht, ist auf beiden Seiten der Walze 2 jeweils ein Kopf 9 angesetzt, dessen Durchmesser dem Walzendurchmesser entspricht. Die Köpfe 9 können, wie in den Figuren 4 bis 7 angedeutet aber lediglich exemplarisch beziffert, Ausnehmungen 10 aufweisen, durch welche Walzenzapfen 11 (lediglich exemplarisch beziffert) ragen, auf welchen die Köpfe 9 drehfest neben der Walze 2 fixiert sind und an denen dann die Beschichtungsanordnung rotierbar gelagert wird. Andererseits können bei einer alternativen Ausführungsform, insbesondere wenn die Walzenzapfen 11 verhältnismäßig kurz sind, die Köpfe eigene, von der Walze 2 wegweisende Zapfen aufweisen, an denen die Beschichtungsanordnung rotierbar gelagert werden kann, während zur Walze 2 hin jeweils Ausnehmungen für die Walzenzapfen 11 vorgesehen sind. Weist die Walze keine Zapfen sondern eine zentrale Bohrung oder aber seitliche Ausnehmungen auf, so können die Köpfe entsprechende Zapfen auch Walzenseitig aufweisen.

Mit einer derartigen Beschichtungsanordnung können dann sowohl die Köpfe 9 als auch die Walze 2 beschichtet werden. Nach dem Beschichten brauchen somit die Köpfe 9 lediglich abgenommen werden, wie in Figur 7 angedeutet, und die Walze ist bis zu ihren Seitenrändern mit einem Belag gleichbleibender Qualität beschichtet.

Durch die Köpfe 9 wird jeweils eine Einlauf- bzw. Auslaufzone bereitgestellt, so dass beim Einlauf bzw. beim Auslauf entstehende Lufteinschlüsse oder Materialüberschüsse bzw. ähnliches unkritisch sind.

## Patentansprüche

1. Walzenbeschichtungsverfahren zur Beschichtung einer Walze mit einem Bezug, der aus wenigstens zwei aushärtenden Komponenten gebildet wird, ***dadurch gekennzeichnet, dass*** zunächst die beiden Komponenten unter Vakuum bzw. Luftausschluss vermischt und anschließend das auf diese Weise bereitgestellte Gemisch als Bezug auf die Walze aufgetragen wird.

2. Verfahren nach Anspruch 1, ***dadurch gekennzeichnet, dass*** eine der beiden Komponenten ein Kunststoff in flüssiger Form und die andere der beiden Komponenten ein Härter ist.

3. Verfahren nach Anspruch 2, ***dadurch gekennzeichnet, dass*** die Kunststoffkomponente ein Harz, insbesondere ein Epoxydharz, ist.

4. Verfahren nach einem der Ansprüche 1 bis 3, ***dadurch gekennzeichnet, dass*** die beiden Komponenten unter Vakuum einander beigegeben werden.

5. Verfahren nach einem der vorstehenden Ansprüche, ***gekennzeichnet durch*** eine Beschichtungseinrichtung, die entlang einer Achse der Walze verlagerbar ist und die ein Auftragsschwert, welches mit einer Bevorratung verbunden ist, und wenigstens ein dem Auftragsschwert nachlaufendes Abstreichschwert umfasst.

6. Verfahren nach Anspruch 5, ***dadurch gekennzeichnet, dass*** das Abstreichschwert mit einem Überlauf zusammenwirkt.

7. Verfahren nach Anspruch 5 oder 6, ***dadurch gekennzeichnet, dass*** das Abstreichschwert gegen seine Bewegungsrichtung von der Walze wegläuft.

8. Verfahren nach einem der vorstehenden Ansprüche, ***gekennzeichnet durch*** eine Beschichtungseinrichtung, die entlang einer Achse der Walze verlagerbar ist und die ein Auftragsschwert, welches mit einer Bevorratung verbunden ist, und wenigstens ein dem Auftragsschwert nachlaufendes Glättschwert umfasst.

9. Verfahren nach Anspruch 8, ***dadurch gekennzeichnet, dass*** das Glättschwert unabhängig von dem Auftragsschwert bewegbar ist.

10. Verfahren nach einem der Ansprüche 5 bis 9, ***dadurch gekennzeichnet, dass*** das Auftragsschwert durch wenigstens einen Ansatz begrenzt ist, welcher, von dem Auftragsschwert und der Bevorratung ausgehend, die Walze übergreift.

11. Verfahren nach einem der vorstehenden Ansprüche, ***dadurch gekennzeichnet, dass*** zunächst zumindest auf einer Seite der Walze ein Kopf angesetzt, dann sowohl der Kopf als auch die Walze beschichtet werden und anschließend der Kopf wieder abgenommen wird.

12. Verfahren nach Anspruch 11, ***dadurch gekennzeichnet, dass*** die Beschichtung spiralförmig aufgetragen wird.

13. Walze mit einer Kunststoff aufweisenden Beschichtung, ***dadurch gekennzeichnet, dass*** die Beschichtung an ihrer Oberfläche unter 50 Poren/m² aufweist.

14. Walze nach Anspruch 13, **dadurch gekennzeichnet, dass** die Beschichtung an ihrer Oberfläche unter 10 Poren/m² aufweist.

15. Walze nach Anspruch 13 oder 14, **dadurch gekennzeichnet, dass** die Beschichtung eine Kunststoffmatrix umfasst, in welche Hartstoffpartikel eingelagert sind.

16. Walze nach Anspruch 15, **dadurch gekennzeichnet, dass** die Hartstoffpartikel Diamantstaubpartikel umfassen.

17. Walze nach Anspruch 15 oder 16, **dadurch gekennzeichnet, dass** die Hartstoffpartikel Partikel aus kubischen Bornitrid umfassen.

18. Walze nach einem der Ansprüche 13 bis 17, ***dadurch gekennzeichnet, dass*** die Beschichtung an wenigstens einer Seite in ihrer durchschnittlichen Güte der durchschnittlichen Güte der übrigen Beschichtung entspricht.

19. Walze nach Anspruch 18, ***dadurch gekennzeichnet, dass*** die Beschichtung eine spiralförmig um die Walze laufende Grundstruktur hat.

## Claims

1. A roller coating method for coating a roller with a covering which is formed from at least two curing components, **characterized in that** firstly the two components are mixed under vacuum and/or air exclusion and subsequently the mixture provided in this way is applied as the covering to the roller.

2. The method according to Claim 1, **characterized in that** one of the two components is a plastic in liquid form and the other of the two components is a curing agent.

3. The method according to Claim 2, **characterized in that** the plastic component is a resin, in particular an epoxide resin.

4. The method according to one of Claims 1 through 3, **characterized in that** the two components are added to one another under vacuum.

5. The method according to one of the preceding claims, **characterized by** a coating unit, which is displaceable along an axis of the roller and comprises an application blade, which is connected to a reservoir, and at least one wiping blade which trails the application blade.

6. The method according to Claim 5, **characterized in that** the wiping blade works together with an overflow.

7. The method according to Claim 5 or 6, **characterized in that** the wiping blade runs away from the roller against its movement direction.

8. The method according to one of the preceding claims, **characterized by** a coating unit which is displaceable along an axis of the roller and comprises an application blade, which is connected to a reservoir, and at least one smoothing blade, which trails the application blade.

9. The method according to Claim 8, **characterized in that** the smoothing blade is movable independently from the application blade.

10. The method according to one of Claims 5 through 9, **characterized in that** the application blade is delimited by at least one attachment, which encompasses the roller, starting from the application blade and the reservoir.

11. The method according to one of the preceding claims, **characterized in that** a head is applied on at least one side of the roller, both the head and also the roller are coated, and subsequently the head is removed again.

12. The method according to Claim 11, **characterized in that** the coating is applied in a spiral.

13. A roller having a coating comprising plastic, **characterized in that** the coating has fewer than 50 pores/m² on its surface.

14. The roller according to Claim 13, **characterized in that** the coating has fewer than 10 pores/m² on its surface.

15. The roller according to Claim 13 or 14, **characterized in that** the coating comprises a plastic matrix, in which hard material particles are intercalated.

16. The roller according to Claim 15, **characterized in that** the hard material particles comprise diamond dust particles.

17. The roller according to Claim 15 or 16, **characterized in that** the hard material particles comprise cubic boron nitride.

18. The roller according to one of Claims 13 through 17, **characterized in that** the coating corresponds on at least one side in its average quality to the average quality of the remaining coating.

19. The roller according to Claim 18, **characterized in that** the coating has a main structure running in a spiral around the roller.

## Revendications

1. Procédé de revêtement de rouleau pour revêtir un rouleau avec un revêtement qui est composé d'au moins deux composants durcissant par vieillissement, **caractérisé en ce que** les deux composants sont d'abord mélangés sous vide respectivement sous exclusion d'air et qu'ensuite le mélange préparé de cette manière est appliqué comme revêtement sur le rouleau.

2. Procédé selon la revendication 1, **caractérisé en ce qu'**un des deux composants est un plastique sous forme liquide et l'autre des deux composants est un durcisseur.

3. Procédé selon la revendication 2, **caractérisé en ce que** le composant plastique est une résine, en particulier une résine époxy.

4. Procédé selon l'une des revendications 1 à 3, **caractérisé en ce que** les deux composants sont ajoutés l'un à l'autre sous vide.

5. Procédé selon l'une des revendications précédentes, **caractérisé par** un dispositif de revêtement qui peut être déplacé le long d'un axe du rouleau et qui comprend une lame d'application qui est reliée à un approvisionnement et au moins une lame de raclage en aval de la lame d'application.

6. Procédé selon la revendication 5, **caractérisé en ce que** la lame de raclage interagit avec un trop-plein.

7. Procédé selon la revendication 5 ou 6, **caractérisé en ce que** la lame de raclage s'éloigne du rouleau contre son sens de déplacement.

8. Procédé selon l'une des revendications précédentes, **caractérisé par** un dispositif de revêtement qui peut être déplacé le long d'un axe du rouleau et qui comprend une lame d'application qui est reliée à un approvisionnement et au moins une lame de lissage en aval de la lame d'application.

9. Procédé selon la revendication 8, **caractérisé en ce que** la lame de lissage est mobile indépendamment de la lame d'application.

10. Procédé selon l'une des revendications 5 à 9, **caractérisé en ce que** la lame d'application est délimitée par au moins une saillie qui empiète sur le rouleau en partant de la lame d'application et de l'approvisionnement.

11. Procédé selon l'une des revendications précédentes, **caractérisé en ce qu'**une tête est d'abord placée sur au moins un côté du rouleau, puis, la tête comme le rouleau sont revêtus et enfin la tête est de nouveau retirée.

12. Procédé selon la revendication 11, **caractérisé en ce que** le revêtement est appliqué en spirale.

13. Rouleau avec un revêtement présentant du plastique, **caractérisé en ce que** le revêtement présente sur sa surface moins de 50 pores/m².

14. Rouleau selon la revendication 13, **caractérisé en ce que** le revêtement présente sur sa surface moins de 10 pores/m².

15. Rouleau selon la revendication 13 ou 14, **caractérisé en ce que** le revêtement comprend une matrice de plastique dans laquelle des particules de substance dure sont stockées.

16. Rouleau selon la revendication 15, **caractérisé en ce que** les particules de substance dure comprennent des particules de poussière de diamant.

17. Rouleau selon la revendication 15 ou 16, **caractérisé en ce que** les particules de substance dure comprennent des particules de nitrure de bore cubique.

18. Rouleau selon l'une des revendications 13 à 17, **caractérisé en ce que** le revêtement correspond dans sa qualité moyenne sur au moins un côté à la qualité moyenne du reste du revêtement.

19. Rouleau selon la revendication 18, **caractérisé en ce que** le revêtement a une structure de base spiralée autour du rouleau.
